# EUROPÄISCHE PATENTSCHRIFT

(11) **EP 0 685 673 B1**
(45) Veröffentlichungstag und Bekanntmachung des Hinweises auf die Patenterteilung: **01.04.1998**
(21) Anmeldenummer: 95108073.8
(22) Anmeldetag: 26.05.1995
(51) Int. Cl.: F16K 37/00

(54) **Schalt- und Meldeeinrichtung**
Switching and indicating device
Dispositif de commande et d'indication

(30) Priorität: 03.06.1994 DE 9409093 U
(43) Veröffentlichungstag der Anmeldung: 06.12.1995
(73) Patentinhaber: ARI-ARMATUREN ALBERT RICHTER GmbH & Co.KG., D-33758 Schloss Holte-Stukenbrock (DE)
(72) Erfinder: Brettschneider, Andreas, D 33719 Bielefeld (DE)
(74) Vertreter: Stracke, Alexander, Dipl.-Ing.

(56) Entgegenhaltungen:
- EP-A- 0 089 563
- DE-A- 2 709 325
- US-A- 2 064 814

## Beschreibung

Die Erfindung betrifft eine Schalt- und Meldeeinrichtung für elektrische Stellantriebe zum Einsatz an Stellventilen, gemäß Oberbegriff des Anspruchs 1.

Aufgabe derartiger handelsüblicher Stellantriebe für Stellventile ist es, von außen auf den Stellantrieb aufgegebene Steuersignale in entsprechende Hubbewegungen einer mit einer Armaturenspindel verbundenen Antriebsbaugruppe mit Motorgetriebe und Antriebsspindel umzusetzen. Für den Betrieb fernbetätigter Stellantriebe ist es von großer Wichtigkeit, eine erreichte Stellung der Armaturenspindel über elektrische Signale z. B. an einen Leitstand zurückzumelden.

Zu diesem Zweck verfügen derartige handelsübliche Stellantriebe über eine Schalt- und Meldeeinrichtung, in der die Stellungsänderungen der Armaturenspindel mechanisch abgegriffen und mit berührend arbeitenden Schaltern in elektrische Signale umgewandelt werden. Die Schalter können üblicherweise vom Anwender des Stellantriebes auf für ihn wichtige Positionen eingestellt werden, z. B. zur Signalisierung der Endlagen der Ventilstellungen oder bestimmter ausgewählter Zwischenlagen. Bei den marktüblichen Schalt- und Meldeeinrichtungen für elektrische Stellantriebe sind zwei Drehmomentschalter zur lastabhängigen Endlagenabschaltung des Antriebes sowie ein Wegschalter zur wegabhängigen Abschaltung des Antriebes in Armaturenöffnungsrichtung vorhanden. Weiterhin können diese Schalt- und Meldeeinrichtungen mit mehreren Zusatzwegschaltern sowie Potentiometern ausgerüstet sein. Ein Potentiometer ordnet dabei dem gesamten Hub des Stellantriebes die elektrische Größe Widerstand zu, so daß über die vorliegende Potentiometer-Schleiferstellung die Stellung der Armaturenspindel bezogen auf die Endstellung des Hubbereiches als analoges Signal nach außen gemeldet wird. Zur Ankopplung der Komplettbaugruppe aus Stellantrieb und Schalt- und Meldeeinrichtung an ein vorhandenes Ventil dient neben der Momentenabstützung durch Festlegen von Gehäusebauteilen aneinander vornehmlich eine Kupplung der stellantriebsseitigen Antriebsspindel mit der ventilseitigen Ventilhubspindel. Hierzu werden häufig mit Federelementen versehene Zwischenglieder eingesetzt, die einen Überlastschutz des Stellantriebes gewährleisten sollen.

Die handelsüblichen Stell- und Meldeeinrichtungen in Verbindung mit den elektrischen Stellantrieben weisen Problempunkte bei der Reproduzierbarkeit von Schaltpunkten auch dadurch auf, daß durch zum Teil aufwendige mechanische Konstruktionen eine Übertragung des Spindelhubes auf die Schaltkontakte bzw. die Potentiometer erfolgt. Durch aufwendige Lagerungen sowie zusätzliche Übertragungselemente müssen die Bewegungsfehler der Spindel, die sich aufgrund der Verzahnung des Gewindes zwangsläufig einstellen, verringert werden. Ebenfalls problematisch ist die Anpassung der Baugruppe aus Stellantrieb sowie Schalt- und Meldeeinrichtung an ein vorhandenes Ventil, da zum einen die Kopplung von Antriebsspindel und Ventilspindel durch die Federelemente aufeinander abzustimmen ist und zum anderen durch die Übertragungsmechanik der Spindelbewegung die Montagefreundlichkeit stark herabgesetzt ist.

Aufgabe der vorliegenden Erfindung ist es daher, eine Baugruppe aus Stellantrieb sowie Schalt- und Meldeeinrichtung bereitzustellen, die einfach montierbar und mit einer hohen Präzision die Reproduzierbarkeit der Schaltpunkte sowie der Potentiometerstellungen gewährleistet, vor allem auch im Hinblick auf eine Nachrüstung an vorhandenen Ventilen.

Die Lösung der Aufgabe ergibt sich aus den Merkmalen des Anspruches 1.

Erfindungswesentlich für die Gestaltung der Schalt- und Meldeeinrichtung in Verbindung mit dem Stellantrieb ist es, daß durch weitgehend spielfreie Führung und Lagerung der Übertragungselemente der Spindelhubbewegung auf die Schaltkontakte eine direkte Erfassung der Spindelstellung möglich ist. Dabei ist neben den Spielen und Losen der Übertragungselemente zum einen eine in axialer Richtung der Ventilspindel mechanisch starre Ankopplung von Antriebsspindel und Ventilspindel gewährleistet, zum anderen werden auf der Seite der Schalt- und Meldeeinrichtung durch die Spindelbewegung auftretende Fehler, vornehmlich Taumelbewegungen der Spindel, durch eine axial spielfreie und radial mit Spiel versehene Ankopplung von Antriebsspindel und Schaltelementen eliminiert.

Die Ankopplung von stellantriebsseitiger Antriebsspindel und ventilseitiger Ventilhubspindel erfolgt mittels kraftschlüssiger Klemmung durch Gewinde, die einen Längenausgleich und ein Beseitigen von Übertragungsspiel erlauben. Die Spindelbewegung der Antriebsspindel wird über dieses Koppelelement direkt auf die daran angeflanschte Ventilspindel übertragen.

Auf der anderen Seite der Antriebsspindel sitzt in deren koaxialer Verlängerung die erfindungsgemäße Ankopplung von Antriebsspindel und, mittels mehrerer Zwischenglieder, Schaltkontakten. Hierbei ist es von besonderer Wichtigkeit, bei der axial spielfreien Übertragung der Spindelhubbewegung gleichzeitig nicht zu vermeidende Taumelbewegungen der Antriebsspindel zu eliminieren. Hierzu wird, statt einer aufwendigen Lagerung wie bei den handelsüblichen Schalt- und Meldeeinrichtungen, durch radial spielbehaftete Lagerung die Taumelbewegung der Spindel zugelassen, ohne daß sich diese in nennenswertem Maß auf den daran gekoppelten, mit den Schaltkontakten in Wirkverbindung stehenden Schaltschlitten überträgt. Dadurch werden Positionsveränderungen des Schaltschlittens aufgrund der Taumelbewegungen der Antriebsspindel abgefangen.

An dem Schaltschlitten angeordnete und verstellbare Schaltnocken werden mit diesem durch die Hubbewegung der Spindel verschoben und betätigen dadurch gehäusefest angeordnete Schaltkontakte, deren Schaltstellung von außen abfragbar ist. Die Einstellung der Schaltnocken erfolgt über spielfrei mit den Schaltnocken im Eingriff stehende Stellspindeln, der Schaltschlitten selber ist ebenfalls spielfrei und axial verschiebbar an einem Gehäuseelement gelagert. Durch eine am Schaltschlitten anbringbare, mit einer Gegenverzahnung spielfrei kämmende Zahnstange kann die Schaltschlittenstellung auf ein an der Gegenverzahnung angeordnetes Potentiometer übertragen werden. Auch hierdurch ist eine genaue und reproduzierbare analoge Erfassung der Ventilstellung möglich.

Die Schaltkontakte sowie alle benötigten elektrischen Einrichtungen werden als Baugruppen auf Platinen vormontiert, die sowohl eine mechanische Befestigung als auch die elektrische Verbindung herstellen.

Weitere zweckmäßige Ausgestaltungen der Erfindung sind in weiteren Unteransprüchen angegeben.

Ein bevorzugtes Ausführungsbeispiel der erfindungsgemäßen Schalt- und Meldeeinrichtung für einen Stellantrieb ist in der Zeichnung dargestellt.

Es zeigen:
- Figur 1: eine Gesamtansicht der erfindungsgemäßen Schalt- und Meldeeinrichtung mit Antriebsbaugruppe und Flanschelement sowie Befestigungselementen an dem Ventil,
- Figur 2: eine Ansicht der Schalt- und Meldeeinrichtung mit frontaler Ansicht des Schaltschlittens,
- Figur 3: eine Detailansicht der Ankopplung von Antriebsspindel und Schaltschlitten,
- Figur 4: eine Seitenansicht der Schalt- und Meldeeinrichtung im Schnitt,
- Figur 5: eine Draufsicht der Schalt- und Meldeeinrichtung im Schnitt,
- Figur 6: eine Ansicht der elektrischen Einrichtungen der Schalt- und Meldeeinrichtungen.

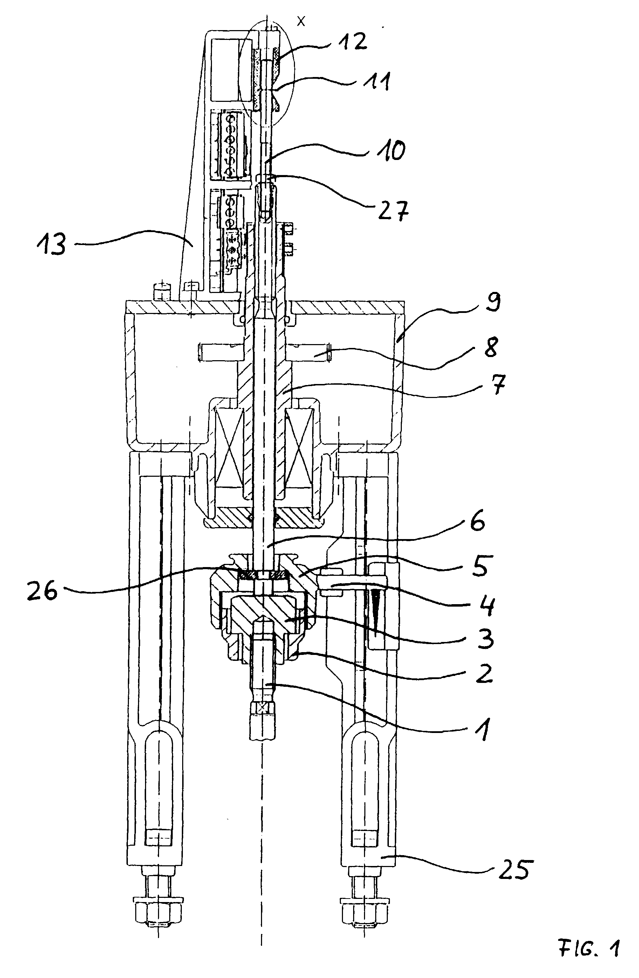

In der Figur 1 ist in einer Schnittdarstellung die komplette Baugruppe aus Stellantrieb und Schalt- und Meldeeinrichtung dargestellt. Die Komplettbaugruppe wird mit einem passenden Klemmhalter 25 an einem nicht dargestellten Ventil befestigt, wobei die Ventilspindel 1 mittels eines Übertragungselementes 2, 3, 4 und 5 an die Antriebsspindel 6 des Stellantriebes gekoppelt wird. Oberhalb dieser Kopplungsstelle liegt die Antriebsbaugruppe aus Motorgetriebeeinheit 9, Spindelantrieb 8 sowie Spindelmutter 7, die zu einer steigenden Bewegung der Antriebsspindel 6 genutzt werden. In Verlängerung der steigenden Antriebsspindel 6 ist eine Übertragungsstange 10 koaxial angeordnet, die für die Übertragung der Bewegung der Antriebsspindel 6 auf einen Schaltschlitten 12 dient. Alle zur eigentlichen Schalt- und Meldeeinrichtung gehörenden Bauteile sind an einem Platinenträger 13 angebracht, der auf der Oberseite der Motorgetriebebaugruppe 9 befestigt ist.

Das Flanschelement zur Übertragung der Bewegung der Antriebsspindel auf die Ventilspindel besteht aus einem Klemmstück 3, in das die Ventilspindel 1 von unten eingeschraubt wird und mittels einer nicht dargestellten Kontermutter fixiert ist. Dieses Klemmstück 3 wird durch eine Überwurfmutter 2 in einen Gegenhalter 5 gezogen, in dem mittels eines Rechteckbleches 26 die Antriebsspindel 6 angeordnet ist. Durch Verspannen der Antriebsspindel 6 mittels des Klemmstückes 3 gegen die Ventilspindel 1 wird eine axial starre Verbindung zwischen der Ventilspindel 1 und der Antriebsspindel 6 hergestellt. Die Bauteile des Flanschelementes werden über eine Verdrehsicherung 4 an dem Klemmhalter 25 verschiebbar angeordnet.

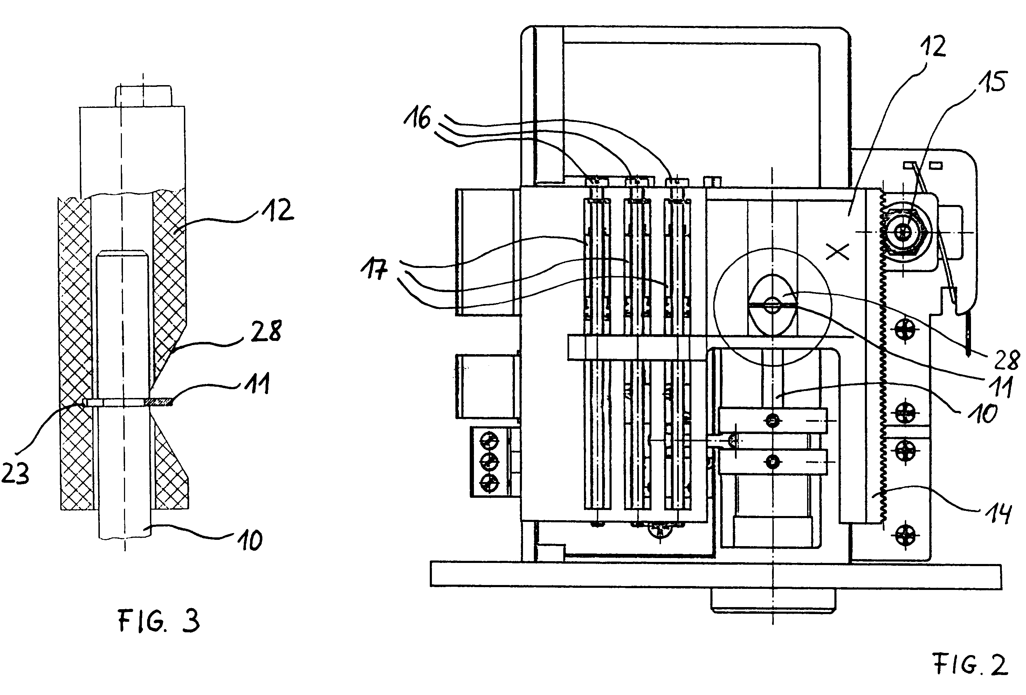

Die in axialer Verlängerung zur Antriebsspindel 6 angeordnete Übertragungsstange 10 wird mittels eines Gewindes und einer Kontermutter 27 an der Antriebsspindel 6 befestigt und trägt an ihrem oberen Ende eine Nut für ein Übertragungsglied 11, das in der bevorzugten Ausführungsform als Sicherungsring realisiert ist. Dieser axial gegenüber der Übertragungsstange 10 und damit der Antriebsstange 6 festgelegte Sicherungsring 11 greift in eine Führungsnut 23 im Schaltschlitten 12 ein wie dies in der Figur 3 dargestellt ist. In axialer Richtung der Übertragungsstange 10 ist die Nut 23 ohne Spiel mit dem Sicherungsring 11 gepaßt, wohingegen die Nut 23 radial gegenüber dem Sicherungsring 11 ein Spiel aufweist. Eine von der Antriebsspindel 6 auf die Übertragungsstange 10 übertragene Taumelbewegung, die sich aufgrund der Zentrierung der Antriebsspindel 6 nicht vermeiden läßt, führt im wesentlichen zu einer Bewegung der Achse der Übertragungsstange 10 um eine fiktive Mittellage. Durch das Spiel zwischen Führungsnut 23 und Sicherungsring 11 wird diese Taumelbewegung nicht auf den Schaltschlitten 12 übertragen, wohingegen eine axiale Hubbewegung der Übertragungsstange 10 spielfrei auf den Schaltschlitten 12 übertragen wird. Hierdurch werden Schwankungen in der axialen Lage des Schaltschlittens 12, die an den Schaltkontakten 18 zu unerwünscht häufigen Schaltvorgängen führen können, vermieden.

In der Figur 2 ist die Schalt- und Meldeeinrichtung in einer Frontalansicht vergrößert dargestellt. Der Schaltschlitten 12 weist eine Ausnehmung 28 für die Montage des Sicherungsringes 11 auf. Auf dem Schaltschlitten 12 angeordnet und gegenüber diesem in Richtung der Achse der Antriebsspindel 6 verschieblich sind die Schaltnocken 17, deren Lage über Einstellspindeln 16 mit Betätigungselementen verstellt werden kann. Ebenfalls fest mit dem Schaltschlitten 12 verbunden ist eine Zahnstange 14, deren Verzahnung mit einer passenden Gegenverzahnung kämmt, die ein Potentiometer 15 verstellt. Ein Verschieben des Schaltschlittens 12 führt also sowohl zu einer Verstellung des Potentiometers 15 als auch einer Verschiebung der Schaltnocken 17 relativ zu Schaltkontakten 18, die in dieser Ansicht nicht sichtbar sind. Durch die spielfrei einstellbare Verzahnung zwischen Zahnstange 14 und Potentiometer 15 sowie die ebenfalls spielfrei gestaltete Verstellung der Schaltnocken 17 relativ zum Schaltschlitten 12 mittels der Verstellspindeln 16 ist eine exakte Einstellung und Übertragung einer Bewegung des Schaltschlittens 12 auf die jeweiligen Betätigungselemente 15, 18 möglich.

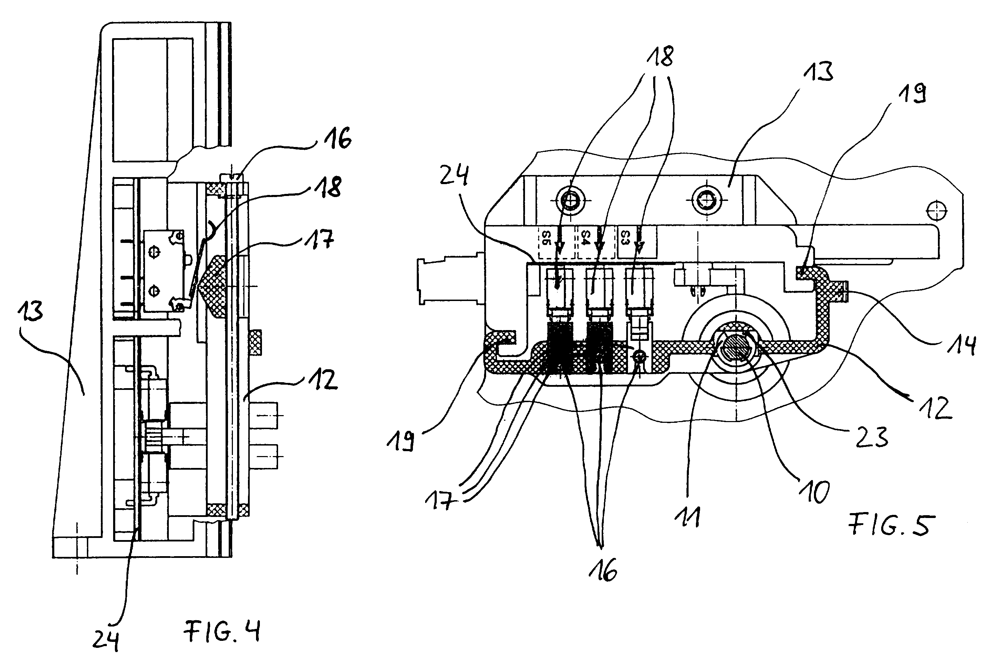

In der Figur 4 ist eine Seitenansicht der Schalt- und Meldeeinrichtung dargestellt, in der das Zusammenwirken von Schaltnocken 17 und Schaltkontakten 18 sowie deren Einstellbarkeit deutlich erkennbar ist. Die Schaltnocken 17 sind vorgespannt auf den Verstellspindeln 16 angeordnet, wobei die Einstellung durch Verdrehen der Verstellspindeln 16 erfolgt. Hierzu ist ein Abstützen des Drehmomentes gegenüber dem Schaltschlitten 12 erforderlich, wobei durch passende Lagerung eine Verdrehung der Schaltnocken 17 um die Längsachse der Verstellspindel 16 nicht stattfindet. Die Schaltnocken 17 werden durch das Gewinde sowie die Vorspannung selbsthemmend auf der Verstellspindel 16 gehalten. Zwischen Schaltschlitten 12 und Platinenträger 13 sind auf Platinenbaugruppen 24 die Schaltkontakte 18 befestigt und elektrisch leitend verbunden, die durch die Schaltnocken 17 betätigt werden. Eine genaue Lagezuordnung der Schaltpunkte zwischen Schaltnocken 17 und Schaltkontakt 18 erfolgt dabei über die Einstellung mittels je einer Verstellspindel 16.

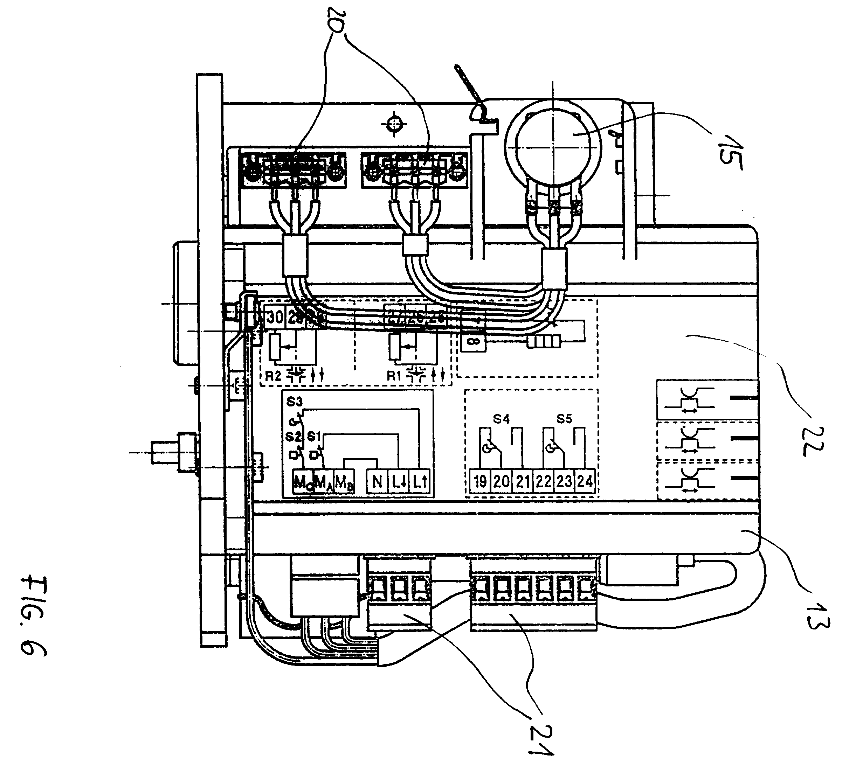

In der Figur 5 ist in einer Draufsicht die Anordnung der Bauelemente der Schalt- und Meldeeinrichtung noch einmal verdeutlicht. Der Schaltschlitten 12, der gegenüber dem Platinenträger 13 in Gleitführungen 19 gelagert ist, trägt die Gewindespindeln 16 sowie die Schaltnocken 17, die gegenüber den Schaltkontakten 18 angeordnet sind. Die Schaltkontakte 18 sind als Baugruppe auf Platinen 24 angebracht. Der Sicherungsring 11 auf der Übertragungsstange 10 wird in einer im Ausbruch dargestellten Führungsnut 23 gehalten und verschiebt den Schaltschlitten 12 bei Verschiebung der Übertragungsstange 10. Die Zahnstange 14 kämmt mit einer in der Darstellung nicht aufgeführten Verzahnung für ein Potentiometer 15.

In der Figur 6 werden die Klemmenbaugruppen 20 und 21 dargestellt, die die elektrische Verbindung der Schalt- und Meldeeinrichtung z. B. mit einer übergeordneten Leitwarte ermöglichen. Zur einfachen Orientierung für das Wartungspersonal ist ein Schaltplan 22 auf dem Platinenträger 13 angeordnet.

## Patentansprüche

1. Schalt- und Meldeeinrichtung von elektrischen Stellantrieben für Stellventile, enthaltend
- eine verdrehfest angeordnete steigende Antriebsspindel (6),
- ein Flanschelement (2, 3, 4, 5) zwischen der Antriebsspindel (6) und einer Ventilspindel (1) des Stellventils,
- eine Antriebseinheit (8, 9) für die axiale Verstellung der Antriebsspindel (6),
- eine Vielzahl von durch die axiale Verstellung der Antriebsspindel (6) betätigten Schaltnocken (17),
**dadurch gekennzeichnet, daß**
- Antriebsspindel (6) und Ventilspindel (1) durch Einstellgewinde des Flanschelementes (2, 3, 4, 5) ko-axial und in axialer Richtung starr verbunden sind,
- die Übertragung der Verstellung der Antriebsspindel (6) auf einen Schaltschlitten (12) durch ein solches, am Oberteil der Antriebsspindel (6) axial festlegbares Übertragungsglied (11) erfolgt, das in einer quer zur Verschiebungsrichtung der Antriebsspindel (6) angeordneten Führung (23) axial spielfrei und radial mit Spiel an dem Schaltschlitten (12) gelagert ist, und diese Verstellung der Antriebsspindel (6) dadurch auf gemeinsam auf dem Schaltschlitten (12) angeordnete, einzeln einstellbare Schaltnocken (17) übertragen wird, die auf bestimmte Hubstellungen der Antriebsspindel (6) einstellbar sind und mit denen zugeordnete Schaltkontakte (18) bei Erreichen bestimmter Positionen der Antriebsspindel (6) betätigbar sind.

2. Schalt- und Meldeeinrichtung nach Anspruch 1, **dadurch gekennzeichnet, daß** das Übertragungsglied (11) als Sicherungsring ausgeführt ist.

3. Schalt- und Meldeeinrichtung nach Anspruch 1, **dadurch gekennzeichnet, daß** über eine an dem Schaltschlitten (12) angeordnete Verzahnung (14) die Verstellung der Antriebsspindel (6) auf ein mit zugehöriger Verzahnung ausgestattetes Potentiometer (15) übertragen wird, mit dem ein analoges, kontinuierliches Signal über die Antriebsspindelstellung bereitstellbar ist.

4. Schalt- und Meldeeinrichtung nach einem der Ansprüche 1 oder 3, **dadurch gekennzeichnet, daß** die Schaltkontakte (18), das Potentiometer (15) und weitere elektrische Anschlußelemente (21, 22) auf Platinen (24) montierbar sind, die in einem gemeinsamen Platinenträger (13) gehalten sind.

5. Schalt- und Meldeeinrichtung nach Anspruch 4, **dadurch gekennzeichnet, daß** der Schaltschlitten (12) spielfrei und in Richtung der Bewegung der Antriebsspindel (6) verschiebbar in einer Gleitführung (19) an dem Platinenträger (13) angeordnet ist.

6. Schalt- und Meldeeinrichtung nach einem der Ansprüche 1 oder 5, **dadurch gekennzeichnet, daß** die Schaltnocken (17) spielfrei und parallel zur Bewegung der Antriebsspindel (6) auf je einer zugehörigen Einstellspindel (16) unter Vorspannung gehalten und ohne Verdrehung um die Achse der Einstellspindel (16) einstellbar und selbsthemmend geführt sind.

7. Schalt- und Meldeeinrichtung nach einem der vorstehenden Ansprüche 4 bis 6, **dadurch gekennzeichnet, daß** der Platinenträger (13) sowie die an diesem angeordneten Bauteile durch Ausführung in einem elektrisch nicht leitenden Material einen Berührungsschutz gegenüber stromführenden Teilen bilden.

8. Schalt- und Meldeeinrichtung nach Anspruch 4, **dadurch gekennzeichnet**, **daß** Anschlußklemmen (20, 21) zur elektrischen Anbindung räumlich zusammenliegend und mit einem erläuternden Schaltplan (22) versehbar aus dem Platinenträger (13) herausgeführt sind.

9. Schalt- und Meldeeinrichtung nach einem der Ansprüche 1 oder 2, **dadurch gekennzeichnet, daß** zur Demontage des Schaltschlittens (12) im wesentlichen nur das vorzugsweise als Sicherungsring ausgeführte Übertragungsglied (11) zu entfernen ist.

## Claims

1. A switching and signalling apparatus of electric actuating drives for regulating valves, including
- a non-rotatably arranged rising drive spindle (6),
- a flange element (2, 3, 4, 5) between the drive spindle (6) and a valve spindle (1) of the regulating valve,
- a drive unit (8, 9) for axial displacement of the drive spindle (6), and
- a plurality of switching cams (17) actuated by the axial displacement of the drive spindle (6),
characterised in that
- the drive spindle (6) and the valve spindle (1) are connected rigidly in the axial direction and coaxially by adjusting screwthread means of the flange element (2, 3, 4, 5), and
- the transmission of the displacement of the drive spindle (6) to a switching slider (12) is effected by such a transmission member (11) which can be axially fixed to the upper portion of the drive spindle (6) and which is mounted on the switching slider (12) without play in the axial direction and with play radially in a guide (23) arranged transversely with respect to the direction of movement of the drive spindle (6) and said movement of the drive spindle (6) is thereby transmitted to individually adjustable switching cams (17) which are arranged jointly on the switching slider (12) and which can be adjusted to given stroke positions of the drive spindle (6) and with which associated switching contacts (18) can be actuated upon the attainment of given positions of the drive spindle (6).

2. A switching and signalling apparatus according to claim 1 characterised in that the transmission member (11) is in the form of a securing ring.

3. A switching and signalling apparatus according to claim 1 characterised in that the displacement of the drive spindle is transmitted by way of a tooth arrangement (14) on the switching slider (12) to a potentiometer (15) which is provided with an associated tooth arrangement and with which an analog continuous signal can be produced by way of the drive spindle position.

4. A switching and signalling apparatus according to one of claims 1 and 3 characterised in that the switching contacts (18), the potentiometer (15) and further electrical connecting elements (21, 22) can be mounted on boards (24) which are held in a common board carrier (13).

5. A switching and signalling apparatus according to claim 4 characterised in that the switching slider (12) is arranged play-free and displaceably in the direction of the movement of the drive spindle (6) in a sliding guide (19) on the board carrier (13).

6. A switching and signalling apparatus according to one of claims 1 and 5 characterised in that the switching cams (17) are held in a prestressed condition play-free and parallel to the movement of the drive spindle (6) on a respective associated adjusting spindle (16) and are guided adjustably and self-lockingly without turning about the axis of the adjusting spindle (16).

7. A switching and signalling apparatus according to one of preceding claims 4 to 6 characterised in that the board carrier (13) and the components arranged thereon form contact protection in relation to current-carrying parts, by virtue of being made of an electrically non-conducting material.

8. A switching and signalling apparatus according to claim 4 characterised in that connecting terminals (20, 21), for electrical connection, are taken out of the board carrier (13) in spatially closely disposed relationship and can be provided with an explanatory circuit diagram (22).

9. A switching and signalling apparatus according to one of claims 1 and 2 characterised in that essentially only the transmission member (11) which is preferably in the form of a securing ring has to be removed for dismantling of the switching slider (12).

## Revendications

1. Dispositif de commande et de signalisation de servo-entrainements électriques de positionnement pour servovannes, comportant
- une broche d'entraînement (6) montante, montée immobilisée en rotation,
- un élément de bridage (2, 3, 4, 5) entre la broche d'entraînement (6) et une tige de soupape (1) de la servovanne,
- une unité d'entraînement (8, 9) pour le déplacement axial de la broche d'entraînement (6),
- une pluralité de cames de commutation (17), actionnées par le déplacement axial de la broche d'entraînement (6),
**caractérisé en ce que**
- la broche d'entraînement (6) et la tige de soupape (1) sont reliées rigidement, coaxialement et dans la direction axiale, par un filetage de réglage de l'élément de bridage (2, 3, 4, 5),
- la transmission du déplacement de la broche d'entraînement (6) à un chariot de commutation (12) s'effectue par un organe de transmission (11), pouvant être fixé axialement sur la partie supérieure de la broche d'entraînement (6), lequel est monté sur le chariot de commutation (12), axialement sans jeu et radialement avec jeu, dans un guidage (23), disposé transversalement à la direction de déplacement de la broche d'entraînement (6), et ce déplacement de la broche d'entraînement (6) est transmis de ce fait à des cames de commutation (17), réglables individuellement, disposées conjointement sur le chariot de commutation (12), qui sont réglables sur des positions de course déterminées de la broche d'entraînement (6) et sont actionnables avec des contacts de commutation (18), qui leur sont associés, lorsque des positions déterminées de la broche d'entraînement (6) sont atteintes.

2. Dispositif de commande et de signalisation selon la revendication 1, **caractérisé en ce que** l'organe de transmission (11) est réalisé sous la forme d'un anneau de blocage.

3. Dispositif de commande et de signalisation selon la revendication 1 , **caractérisé en ce que** par l'intermédiaire d'une denture (14), disposée sur le chariot de commutation (12), le déplacement de la broche d'entraînement (6) est transmis à un potentiomètre (15), pourvu d'une denture correspondante, à l'aide duquel peut être délivré un signal continu, analogique, relatif à la position de la broche d'entraînement.

4. Dispositif de commande et de signalisation selon l'une des revendications 1 ou 3, **caractérisé en ce que** les contacts de commutation (18), le potentiomètre (15) et d'autres éléments de branchement électriques (21, 22) peuvent être montés sur des platines (24), qui sont maintenues dans un support de platines (13) commun.

5. Dispositif de commande et de signalisation selon la revendication 4, **caractérisé en ce que** le chariot de commutation (12) est déplaçable sans jeu et dans la direction du déplacement de la broche d'entraînement (6), dans une glissière (19), sur le support de platines (13).

6. Dispositif de commande et de signalisation selon l'une des revendications 1 ou 5, **caractérisé en ce que** les cames de commutation (17) sont maintenues sous précontrainte, sans jeu et parallèlement au déplacement de la broche d'entraînement (6), chacune sur une broche de réglage (16) correspondante et sont guidées de manière réglable et auto-bloquante, sans rotation autour de l'axe de la broche de réglage (16).

7. Dispositif de commande et de signalisation selon l'une des revendications précédentes 4 à 6, **caractérisé en ce que** le support de platines (13) ainsi que les composants, montés sur celui-ci, forment une protection contre les contacts à l'égard d'éléments conduisant le courant, par une réalisation dans un matériau électriquement non conducteur.

8. Dispositif de commande et de signalisation selon la revendication 4, **caractérisé en ce que** des bornes de branchement (20, 21), réunies dans l'espace en vue du raccordement électrique et pouvant être pourvues d'un schéma de montage explicatif (22), ressortent du support de platines (13).

9. Dispositif de commande et de signalisation selon l'une des revendications 1 ou 2, **caractérisé en ce que** pour le démontage du chariot de commutation (12), il suffit essentiellement d'enlever l'organe de transmission (11), réalisé de préférence sous la forme d'un anneau de blocage.
